# EUROPEAN PATENT APPLICATION

(11) **EP 3 319 020 A1**
(43) Date of publication of application: **09.05.2018**
(21) Application number: 16821343.7
(22) Date of filing: 01.07.2016
(51) Int. Cl.: G06Q 10/02, G06Q 10/06

(54) **RESERVATION MANAGEMENT TERMINAL, RESERVATION MANAGEMENT METHOD, AND RESERVATION MANAGEMENT PROGRAM**

(30) Priority: 03.07.2015 JP 2015134273
(71) Applicant: Recruit Holdings Co., Ltd., Tokyo 104-0061 (JP)
(72) Inventor: NAGAO, Miki, Tokyo 100-6640 (JP); HIGUCHI, Kohei, Tokyo 100-6640 (JP); A, Eika, Tokyo 100-6640 (JP)
(74) Representative: EIP
(86) International application number: PCT/JP2016/069685
(87) International publication number: WO 2017/006874

(57) **Abstract**

Reservations for a plurality of tables are managed. Input of the number of persons with a reservation for a customer coming to a store on a reservation date is received, icons respectively corresponding to the plurality of tables arranged inside the store are displayed on a screen, a selection of the displayed icons is received, and after the input of the number of persons with a reservation and the selection of the icons are established, reservation information including customer identification information that specifies the customer, the reservation date, the number of persons with a reservation and table identification information corresponding to the selected icons is generated for each piece table identification information, and in the case that the plurality of icons are selected, group identification information that specifies a group formed of the plurality of tables is issued and added to each piece reservation information.

## Description

### Cross Reference to Related Application

This application is based upon Japanese Patent Application No. 2015-134273 filed on July 3, 2015, the contents of which are incorporated herein by reference.

### Technical Field

The present invention relates to a reservation management terminal, a reservation management method and a reservation management program.

### Background Art

Patent Literature 1 described below discloses a method of managing a reservation schedule in a beauty parlor where a plurality of beauticians are deployed. In this method, by inserting a reservation plate of a beautician into a time-sequential frame of a schedule table every time a reservation is received, the schedule of each beautician is managed, and a frame with no reservation among the frames of the schedule table is considered as free time of the beautician.

### Citation List

### Patent Literature

Patent Literature 1: Japanese Patent Laid-Open No. 2007-156831

### Summary of Invention

In the method described in Patent Literature 1, a reservation schedule is managed in units of beauticians. On the other hand, in a restaurant or the like, since a reservation schedule is managed in units of tables, when a group of customers come, for example, a plurality of tables are managed collectively. Therefore, in a restaurant or the like, it is needed to manage reservations for a plurality of tables, which is not assumed in the method described in Patent Literature 1.

The present invention is implemented to solve the above-described problem, and one of objects is to provide a reservation management terminal, a reservation management method and a reservation management program capable of managing reservations for a plurality of tables.

A reservation management terminal which is one aspect of the present invention includes: icon display means that displays icons respectively corresponding to a plurality of tables arranged inside a store on a screen; reception means that receives input of a number of persons with a reservation for a customer coming to the store on a reservation date, and receives a selection of the icons respectively corresponding to the plurality of tables to be allocated to the customer for the received number of persons with a reservation from the icons displayed by the icon display means; information generation means that, after input of the number of persons with a reservation and the selection of the plurality of icons are established, respectively generates reservation information including at least customer identification information that specifies the customer, the reservation date, the number of persons with a reservation, and table identification information that specifies the table corresponding to one of the selected icons, for each piece of the table identification information corresponding to the plurality of selected icons; and means that transmits each piece of the reservation information generated by the information generation means to a server, and the information generation means issues group identification information that specifies a group formed of the plurality of tables corresponding to the plurality of selected icons and adds the group identification information to each piece of the reservation information.

Schedule display means that time-sequentially arranges, lists and displays a utilization schedule of each table in units of the utilization schedule may be further included, and when displaying the utilization schedule corresponding to the reservation information including the group identification information, the schedule display means may display the group identification information inside a frame to display the utilization schedule.

When other system reservation information which is information managed by another system and includes at least the customer identification information, the reservation date, the number of persons with a reservation and table type information that specifies a type of the table is received, the information generation means may generate the reservation information based on the other system reservation information.

When the other system reservation information is received, the information generation means may generate the table identification information based on the table type information included in the other system reservation information.

When generating the table identification information, the information generation means may select the table identification information corresponding to one or more of the tables which are vacant on the reservation date included in the other system reservation information and at which seats for the number of persons with a reservation included in the other system reservation information can be secured, among the tables corresponding to the table type information, as a target of the generation.

In a reservation management method which is one aspect of the present invention, a computer executes: an icon display step of displaying icons respectively corresponding to a plurality of tables arranged inside a store on a screen; a reception step of receiving input of a number of persons with a reservation for a customer coming to the store on a reservation date, and receiving a selection of the icons respectively corresponding to the plurality of tables to be allocated to the customer for the received number of persons with a reservation from the icons displayed in the icon display step; an information generation step of, after input of the number of persons with a reservation and the selection of the plurality of icons are established, respectively generating reservation information including at least customer identification information that specifies the customer, the reservation date, the number of persons with a reservation, and table identification information that specifies the table corresponding to one of the selected icons, for each piece of the table identification information corresponding to the plurality of selected icons; and a step of transmitting each piece of the reservation information generated by the information generation means to a server, and in the information generation step, group identification information that specifies a group formed of the plurality of tables corresponding to the plurality of selected icons is issued and added to each piece of the reservation information.

A reservation management program which is one aspect of the present invention makes a computer function as: icon display means that displays icons respectively corresponding to a plurality of tables arranged inside a store on a screen; reception means that receives input of a number of persons with a reservation for a customer coming to the store on a reservation date, and receives a selection of the icons respectively corresponding to the plurality of tables to be allocated to the customer for the received number of persons with a reservation from the icons displayed by the icon display means; information generation means that, after input of the number of persons with a reservation and the selection of the plurality of icons are established, respectively generates reservation information including at least customer identification information that specifies the customer, the reservation date, the number of persons with a reservation, and table identification information that specifies the table corresponding to one of the selected icons, for each piece of the table identification information corresponding to the plurality of selected icons; and means that transmits each piece of the reservation information generated by the information generation means to a server, and the information generation means issues group identification information that specifies a group formed of the plurality of tables corresponding to the plurality of selected icons and adds the group identification information to each piece of the reservation information.

### Advantageous Effect of Invention

According to the present invention, reservations for a plurality of tables can be managed.

### Brief Description of Drawings

[Figure 1] Figure 1 is a diagram illustrating a configuration of a reservation management system including store terminals in an embodiment.
[Figure 2] Figure 2 is a diagram illustrating a configuration of the store terminal illustrated in Figure 1.
[Figure 3] Figure 3 is a diagram illustrating a schedule list screen displayed on a screen of the store terminal.
[Figure 4] Figure 4 is a diagram illustrating a reservation input screen displayed on the screen of the store terminal.
[Figure 5] Figure 5 is a diagram illustrating a table selection screen displayed on the screen of the store terminal.
[Figure 6] Figure 6 is a diagram illustrating the schedule list screen displayed on the screen of the store terminal.
[Figure 7] Figure 7 is a flowchart for describing a processing procedure when managing reservation information with the store terminal.
[Figure 8] Figure 8 is a diagram illustrating a configuration of the reservation management system in a modification.

### Description of Embodiment

Hereinafter, the embodiment of the present invention will be described in details with reference to the drawings. Note that same signs are attached to same elements and redundant description is omitted.

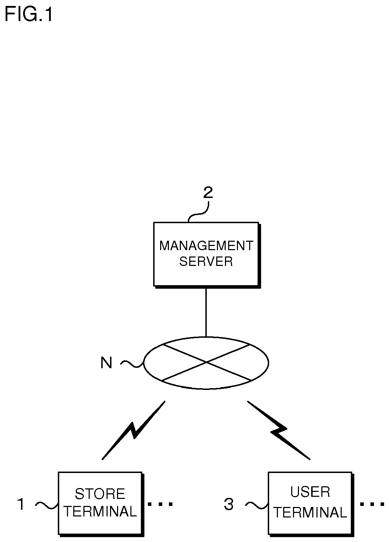

Figure 1 is a schematic diagram illustrating a configuration of a reservation management system including store terminals (reservation management terminals) relating to one embodiment of the present invention. As illustrated in the figure, in the present embodiment, the reservation management system includes store terminals 1 as the reservation management terminals, a management server 2, and user terminals 3. The individual store terminals 1 and the individual user terminals 3 are configured so as to communicate with the management server 2 through a network N, respectively.

The store terminal 1 is a terminal device used by a clerk for example and it is preferable that the store terminal 1 can be carried by the clerk. In each store, one or more store terminals 1 can be used. An example of the store is a store where customers are served using a plurality of tables arranged inside the store, such as a restaurant.

The management server 2 is configured by a computer with a high arithmetic processing capacity for example, and achieves a server function by an operation of a predetermined server program in the computer. Here, the number of the computer configuring the management server 2 does not need to be always one, and the management server 2 may be configured by a plurality of computers distributed on a network.

The user terminal 3 is a terminal device used by a customer (user) utilizing the store or the like, and it is preferable that the user terminal 3 can be carried by the customer.

In the present embodiment, a tablet terminal is assumed as the store terminal 1, and a smartphone is assumed as the user terminal 3. However, without being limited to them, as the store terminal 1 and the user terminal 3, for example, a notebook computer (personal computer), a tablet terminal, a smartphone, a cellular phone, a personal digital assistant (PDA), a PC, and other terminal devices can be appropriately used.

The network N includes a communication network capable of transmitting and receiving information among the management server 2, the store terminals 1 and the user terminals 3. For example, the network N may be the Internet, a LAN, a private line, a telephone line, an intra-company network, a mobile communication network, Bluetooth (R), WiFi (Wireless Fidelity), other communication lines, or a combination thereof or the like, regardless of whether it is wired or wireless.

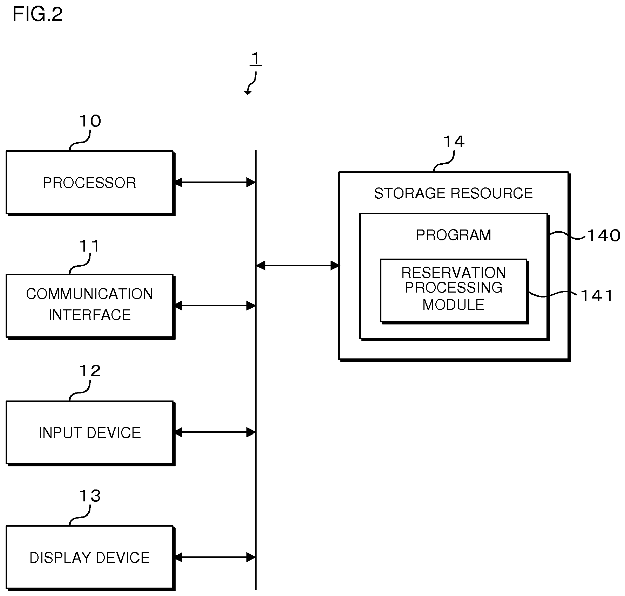

As illustrated in Figure 2, the store terminal 1 includes, for example, a processor 10, a communication interface 11, an input device 12, a display device 13, and a storage resource 14. For the display device 13 in the present embodiment, a touch panel is illustratively used. The touch panel is formed of a display and a position input device that detects a touch operation.

The processor 10 is configured from an arithmetic and logical operation unit that processes an arithmetic operation, a logical operation and a bit operation or the like, and various kinds of registers, and realizes respective kinds of functions to be described later by executing a computer program 140 stored in the storage resource 14. The various kinds of registers are, for example, a program counter, a data register, an instruction register and a general purpose register or the like.

The communication interface 11 is connected to the network N and is a hardware module for communicating with the other terminals on the network. The communication interface 11 is, for example, a modem such as an ISDN modem, an ADSL modem, a cable modem, an optical modem or a software modem.

The storage resource 14 is, for example, a logical device provided by a storage area of a physical device. The physical device is, for example, a computer-readable recording medium such as a disk drive or a semiconductor memory. The storage resource 14 may be constructed by mapping a plurality of physical devices to one logical device, or may be constructed by mapping one physical device to a plurality of logical devices. In the storage resource 14, the computer program 140 is stored.

In the storage resource 14, in addition to the computer program 140, an operating system program, a driver program and various kinds of data or the like used in processing of the store terminal 1 are stored. Examples of the driver program include an input device driver program for controlling the input device 12, and an output device driver program for controlling the display device 13. Examples of the various kinds of data include reservation information applied by the customer before coming to the store, order information ordered by the customer, and accounting information about payment by the customer or the like.

The computer program 140 is a program for performing predetermined processing, and includes a plurality of software modules that are appropriately called and executed during the operation of a main program of the store terminal 1. The software modules are subprograms made into modules to execute specific processing respectively, and prepared using a procedure, a subroutine, a method, a function and a data structure or the like, for example.

The computer program 140 illustratively includes a reservation processing module 141. Hereinafter, the function realized by executing the reservation processing module 141 will be described.

The reservation processing module 141 receives input of information regarding a reservation. The information regarding a reservation is the information inputted by a clerk who receives a phone call from a customer making a reservation, and includes a reservation date, a name of a person making a reservation, a contact, the number of persons with a reservation, and reservation table information or the like, for example.

The reservation date is the date that the customer desires to come to the store. The name of a person making a reservation is the name of the customer, and the contact is a telephone number or a mail address or the like of the customer. The name of a person making a reservation and the contact are customer identification information that specifies the customer. The reservation table information includes, in addition to table identification information that specifies a table, information regarding the table such as table type information that specifies a type of the table to be reserved. Examples of the type of the table include a table, a tatami room, a private room, and a counter or the like.

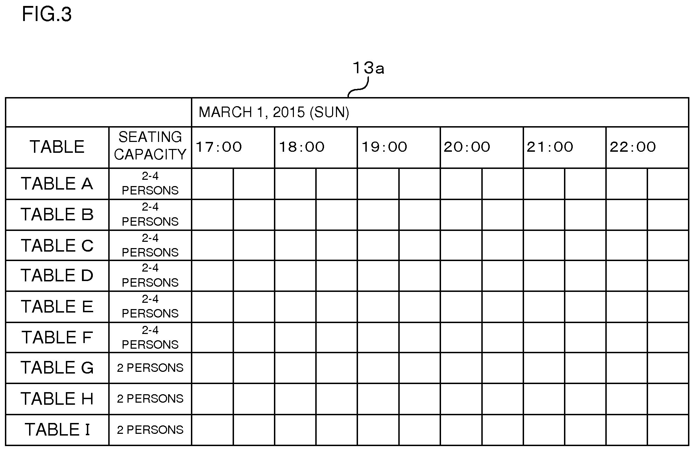

An example of a procedure of inputting the information regarding a reservation in the store terminal 1 will be described below. First, a schedule list screen 13a illustrated in Figure 3 is displayed on the display. On the schedule list screen 13a, utilization schedules registered for each table inside the store are time-sequentially arranged, listed and displayed in units of the utilization schedule. The utilization schedules may be limited to reserved schedules, or may include non-reserved schedules in addition to the reserved schedules.

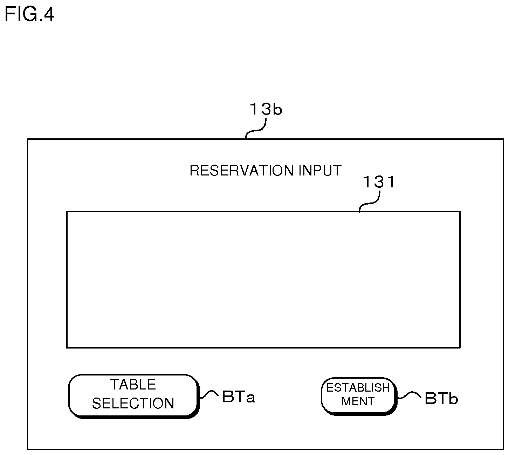

Subsequently, when a time slot to receive a reservation is tapped with a finger or a touch pen or the like in the schedule list screen 13a, a reservation input screen 13b illustrated in Figure 4 is pop-up displayed. Note that, without being limited to tapping, tracing (swiping, sliding) may be performed.

Then, to an input field 131 of the reservation input screen 13b, the information regarding the reservation is inputted. Here, in the input field 131, for example, the time slot tapped when displaying the reservation input screen 13b may be initially displayed as a reservation time. In this case, the initially displayed reservation time can be appropriately changed in the input field 131.

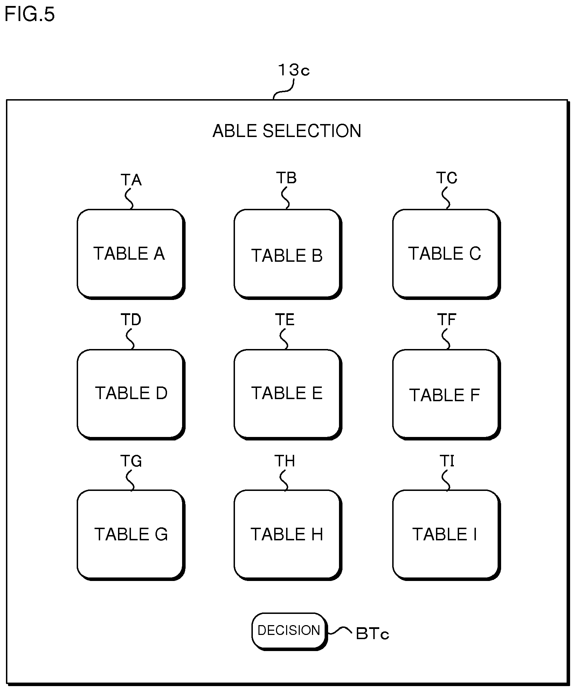

Next, when a table selection button BTa of the reservation input screen 13b is selected, a table selection screen 13c illustrated in Figure 5 is pop-up displayed. The table selection screen 13c displays icons TA-TI respectively corresponding to the plurality of tables arranged inside the store.

Subsequently, of the plurality of table icons TA-TI displayed on the table selection screen 13c, one or more icons are selected. A seating capacity is predetermined for each table, and the clerk takes the seating capacity for each table into consideration, and arbitrarily selects tables in a range of securing seats for the number of persons with a reservation for the customer who makes a reservation.

Here, the table selection screen 13c may be displayed such that only the icons of the tables available in the time slot of the reservation date can be selected. In addition, not only can the tables be selected arbitrarily by the clerk but also input may be checked so that respective conditions such as the number of persons with a reservation, the seating capacity of the table, the type of the table and propriety of joining the tables are arbitrarily combined and only a table or a combination of tables satisfying the conditions can be selected. The propriety of joining the tables is information indicating whether or not a table is one that can be joined with another table.

Then, when a decision button BTc displayed on the table selection screen 13c is selected, the table selection screen 13c is closed, and a state where the reservation input screen 13b illustrated in Figure 4 is pop-up displayed is returned. Next, when an establishment button BTb of the reservation input screen 13b is selected, the reservation input screen 13b is closed, and the state where the schedule list screen 13a illustrated in Figure 3 is displayed is returned.

When the establishment button BTb of the reservation input screen 13b illustrated in Figure 4 is selected, reservation information is generated based on the inputted information regarding the reservation. Here, in the case that a plurality of tables are selected in the table selection screen 13c illustrated in Figure 5, group identification information is issued and added to the reservation information. The group identification information is identification information for specifying a group formed of the plurality of tables. Note that the reservation information may include at least the customer identification information, the reservation date, the number of persons with a reservation, and the table identification information.

In addition, timing of generating the reservation information is not limited to the time when the establishment button BTb of the reservation input screen 13b illustrated in Figure 4 is selected. For example, the reservation information may be generated when the decision button BTc of the table selection screen 13c illustrated in Figure 5 is selected. In this case, when it is assumed that the input of the information regarding the reservation is established when the decision button BTc is selected, the establishment button BTb of the reservation input screen 13b illustrated in Figure 4 can be omitted.

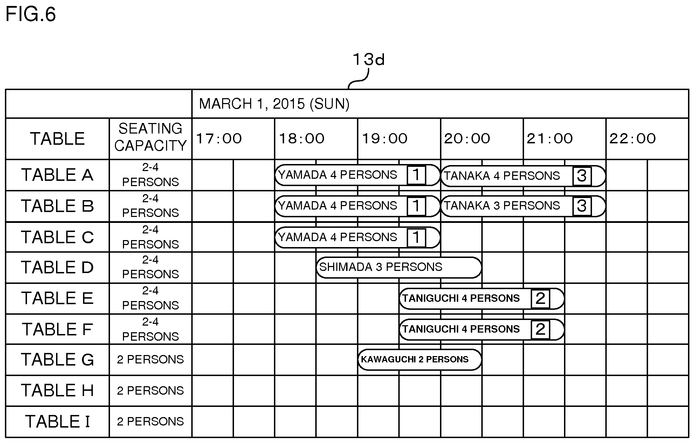

Figure 6 illustrates an example of a schedule list screen 13d displaying the utilization schedules of the respective tables inside the store. The schedule list screen 13d illustrated in the figure indicates that Mr./Ms. Yamada's group of 12 persons has reserved three tables A, B and C from 18:00 to 20:00, Mr./Ms. Tanaka's group of 7 persons has reserved two tables A and B from 20:00 to 22:00, Mr./Ms. Shimada's group of 3 persons has reserved a table D from 18:30 to 20:30, Mr./Ms. Taniguchi's group of 8 persons has reserved two tables E and F from 19:30 to 21:30, and Mr./Ms. Kawaguchi's group of 2 persons has reserved a table G from 19:00 to 20:30.

In addition, in the schedule list screen 13d, group identification information "1" indicating the same group is displayed respectively inside the display frames of the utilization schedule of the three tables A, B and C reserved from 18:00 by Mr./Ms. Yamada, group identification information "2" indicating the same group is displayed respectively inside the display frames of the utilization schedule of the two tables E and F reserved from 19:30 by Mr./Ms. Taniguchi, and group identification information "3" indicating the same group is displayed respectively inside the display frames of the utilization schedule of the two tables A and B reserved from 20:00 by Mr./Ms. Tanaka.

In this way, by respectively displaying the group identification information indicating the same group inside the display frames corresponding to the group utilizing the plurality of tables, a table group filled with the same reservation can be easily confirmed.

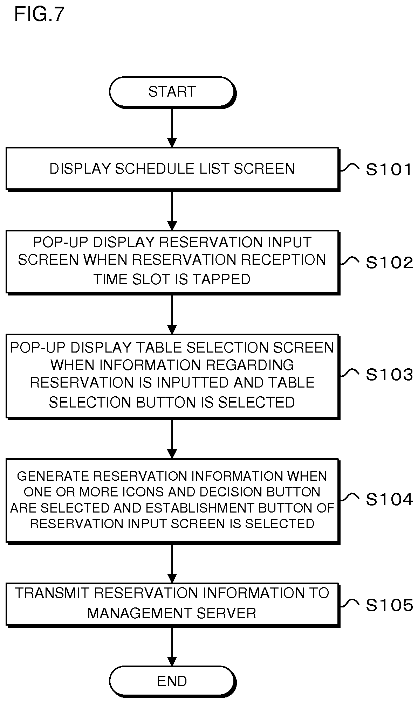

Next, with reference to Figure 7, a processing procedure when managing the reservation information with the store terminal 1 will be described. The processing procedure is successively performed by the processor 10 of the store terminal 1 executing the computer program 140.

First, according to a predetermined touch operation by the clerk who receives a reservation from a customer by telephone, the reservation processing module 141 makes the schedule list screen be displayed on the display (step S101).

Next, when the time slot to receive the reservation is tapped, the reservation processing module 141 makes the reservation input screen be pop-up displayed (step S102).

Subsequently, when the information regarding the reservation is inputted to the input field of the reservation input screen and the table selection button is selected, the reservation processing module 141 makes the table selection screen be pop-up displayed (step S103).

Then, when one or more icons are selected from the plurality of table icons of the table selection screen, the decision button is selected, and then the establishment button of the reservation input screen is selected, the reservation processing module 141 generates the reservation information based on the selected table icons and the information regarding the reservation inputted in step S103 (step S104).

Subsequently, the reservation processing module 141 transmits the reservation information generated in step S104 described above to the management server 2 (step S105). The management server 2 can collect the reservation information from the respective store terminals 1 and analyze utilization situations or the like of the respective stores based on the collected reservation information.

As described above, according to the store terminal 1 in the embodiment, the input of the number of persons with a reservation for the customer coming to the store on the reservation date or the like and the selection of the icons respectively corresponding to the plurality of tables arranged inside the store are received, and after the input of the number of persons with a reservation or the like and the selection of the icons are established, the reservation information for each piece table identification information can be generated based on the inputted/selected information, and in the case that the plurality of icons are selected, the group identification information for specifying the group formed of the plurality of tables can be issued and added to each piece of the reservation information.

Thus, according to the store terminal 1 in the embodiment, in the case of receiving the reservation for the plurality of tables, the reservation for the plurality of tables can be managed. As a result, in reservation processing for the plurality of tables, a fixed processing speed can be secured while guaranteeing accuracy.

In addition, according to the store terminal 1 in the embodiment, when time-sequentially arranging, listing and displaying the utilization schedules for each table in units of the utilization schedule, in the case that the utilization schedule of the reservation information including the group identification information is registered, the group identification information can be displayed inside the frame to display the utilization schedule.

Thus, according to the store terminal 1 in the embodiment, the table group filled with the same reservation can be easily confirmed from a schedule table in which the utilization schedules are listed and displayed for each table.

### [Modification]

Note that the present invention is not limited to the embodiment described above, and can be implemented in other various forms without departing from the scope of the present invention. Therefore, the above-described embodiment is just an example in all respects, and should not be narrowly interpreted. For example, the order of respective processing steps described above can be arbitrarily changed without causing discrepancy in processing contents, or the processing steps can be executed in parallel.

In addition, in the embodiment described above, the reservation information is generated based on the information regarding the reservation inputted by operating the store terminal 1 by a clerk, but information to be a base of the reservation information is not limited to this information. For example, the reservation information may be generated based on information inputted in a Web reservation system (other system) constructed separately from the reservation management system.

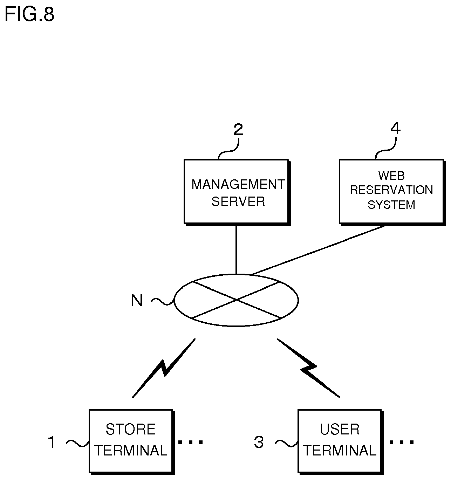

Figure 8 illustrates a configuration of the reservation management system in the present modification. As illustrated in the figure, the reservation management system in the present modification is different from the reservation management system in the embodiment at the point that a Web reservation system 4 is constructed on the network N in addition to the configuration of the reservation management system in the embodiment. The Web reservation system 4 is a system that receives a reservation to come to the store on a Web. In the Web reservation system 4 in the present modification, tables inside a store are not managed by the table identification information as in the management server 2 or the store terminal 1, and are managed by the table type information.

Table types managed by the Web reservation system 4 include, for example, tables at which seats can be joined, tables at which seats cannot be joined, and a counter or the like. Note that, so as to make the table types managed by the Web reservation system 4 and the table types managed by the management server 2 or the store terminal 1 be able to correspond to each other, for example, the respective table types are managed in correspondence, or both of the table types are managed respectively.

When managing tables inside a store with the Web reservation system 4, for example, management is performed such that 10 tables with the seating capacity of 2 to 4 persons are the tables at which seats can be joined, 5 tables with the seating capacity of 2 to 10 persons are the tables at which seats cannot be joined, and 4 counter seats with the seating capacity of 1 person are the counter or the like.

A user of the Web reservation system 4 logs in to the Web reservation system, then specifies a store to make a reservation, and advances reservation processing by inputting or selecting a reservation date, the number of persons with a reservation, and the table type, for example. By executing the reservation processing, other system reservation information including the customer identification information, the reservation date, the number of persons with a reservation and the table type information for example is generated for each store. The Web reservation system 4 transmits the generated other system reservation information to the management server 2 or the store terminal 1.

Here, when generating the other system reservation information in the Web reservation system 4, by utilizing member information registered beforehand in the Web reservation system as the customer identification information, the information to be inputted by the user when making a reservation can be reduced. The member information includes, for example, a login ID, a name, a telephone number and a mail address.

When the other system reservation information is received, the reservation processing module 141 of the store terminal 1 generates the reservation information based on the received other system reservation information. In this case, since the other system reservation information does not include the table identification information and the group identification information in the reservation information, the reservation processing module 141 generates the table identification information and the group identification information based on the table type information included in the other system reservation information.

Specifically, the reservation processing module 141 selects the table identification information corresponding to one or more tables which are the tables to be vacant in the time slot of the reservation date and at which seats for the number of persons with a reservation can be secured among the tables corresponding to the table type information, as the table identification information of the reservation information. In the case that the plurality of pieces of table identification information are selected, the reservation processing module 141 issues the group identification information and adds the group identification information to the reservation information.

In addition, the program in the embodiment can be installed or loaded to a computer by being downloaded through various kinds of recording media (computer-readable recording media) such as an optical disk like a CD-ROM, a magnetic disk or a semiconductor memory, or through a communication network or the like.

### Industrial Applicability

A reservation management device, a reservation management method and a reservation management program according to the present invention are suitable for managing reservations for a plurality of tables.

### Reference Signs List

1...Store terminal
2...Management server
3...User terminal
4...Web reservation system
10...Processor
11...Communication interface
12...Input device
13...Display device
14...Storage resource
140...Computer program
141...Reservation processing module
N...Network

## Claims

1. A reservation management terminal comprising:
icon display means that displays icons respectively corresponding to a plurality of tables arranged inside a store on a screen;
reception means that receives input of a number of persons with a reservation for a customer coming to the store on a reservation date, and receives a selection of the icons respectively corresponding to the plurality of tables to be allocated to the customer for the received number of persons with a reservation from the icons displayed by the icon display means;
information generation means that, after input of the number of persons with a reservation and the selection of the plurality of icons are established, respectively generates reservation information including at least customer identification information that specifies the customer, the reservation date, the number of persons with a reservation, and table identification information that specifies the table corresponding to one of the selected icons, for each piece of the table identification information corresponding to the plurality of selected icons; and
means that transmits each piece of the reservation information generated by the information generation means to a server,
wherein the information generation means issues group identification information that specifies a group formed of the plurality of tables corresponding to the plurality of selected icons and adds the group identification information to each piece of the reservation information.

2. The reservation management terminal according to claim 1, further comprising
schedule display means that time-sequentially arranges, lists and displays a utilization schedule of each table in units of the utilization schedule,
wherein, when displaying the utilization schedule corresponding to the reservation information including the group identification information, the schedule display means displays the group identification information inside a frame to display the utilization schedule.

3. The reservation management terminal according to claim 2, wherein, when other system reservation information which is information managed by another system and includes at least the customer identification information, the reservation date, the number of persons with a reservation and table type information that specifies a type of the table is received, the information generation means generates the reservation information based on the other system reservation information.

4. The reservation management terminal according to claim 3, wherein, when the other system reservation information is received, the information generation means generates the table identification information based on the table type information included in the other system reservation information.

5. The reservation management terminal according to claim 4, wherein, when generating the table identification information, the information generation means selects the table identification information corresponding to one or more of the tables which are vacant on the reservation date included in the other system reservation information and at which seats for the number of persons with a reservation included in the other system reservation information can be secured, among the tables corresponding to the table type information, as a target of the generation.

6. A reservation management method,
wherein a computer executes:
an icon display step of displaying icons respectively corresponding to a plurality of tables arranged inside a store on a screen;
a reception step of receiving input of a number of persons with a reservation for a customer coming to the store on a reservation date, and receiving a selection of the icons respectively corresponding to the plurality of tables to be allocated to the customer for the received number of persons with a reservation from the icons displayed in the icon display step;
an information generation step of, after input of the number of persons with a reservation and the selection of the plurality of icons are established, respectively generating reservation information including at least customer identification information that specifies the customer, the reservation date, the number of persons with a reservation, and table identification information that specifies the table corresponding to one of the selected icons, for each piece of the table identification information corresponding to the plurality of selected icons; and
a step of transmitting each piece of the reservation information generated by the information generation means to a server,
wherein, in the information generation step, group identification information that specifies a group formed of the plurality of tables corresponding to the plurality of selected icons is issued and added to each piece of the reservation information.

7. A reservation management program making a computer function as:
icon display means that displays icons respectively corresponding to a plurality of tables arranged inside a store on a screen;
reception means that receives input of a number of persons with a reservation for a customer coming to the store on a reservation date, and receives a selection of the icons respectively corresponding to the plurality of tables to be allocated to the customer for the received number of persons with a reservation from the icons displayed by the icon display means;
information generation means that, after input of the number of persons with a reservation and the selection of the plurality of icons are established, respectively generates reservation information including at least customer identification information that specifies the customer, the reservation date, the number of persons with a reservation, and table identification information that specifies the table corresponding to one of the selected icons, for each piece of the table identification information corresponding to the plurality of selected icons; and
means that transmits each piece of the reservation information generated by the information generation means to a server,
wherein the information generation means issues group identification information that specifies a group formed of the plurality of tables corresponding to the plurality of selected icons and adds the group identification information to each piece of the reservation information.
